# EUROPEAN PATENT SPECIFICATION

(11) **EP 1 778 463 B1**
(45) Date of publication and mention of the grant of the patent: **10.06.2009**
(21) Application number: 05784828.5
(22) Date of filing: 22.07.2005
(51) Int. Cl.: B29D 11/00, B29C 45/14

(54) **METHOD FOR INTEGRATING A LIGHT GUIDE IN OR ONTO A SUPPORT STRUCTURE,**
VERFAHREN FÜR DEN EINBAU EINES LICHTLEITERS IN ODER AUF EINER TRÄGERSTRUKTUR
PROCEDE D'INTEGRATION DE GUIDE DE LUMIERE A L'INTERIEUR DE OU SUR UNE STRUCTURE SUPPORT

(30) Priority: 11.08.2004 EP 04103863
(43) Date of publication of application: 02.05.2007
(73) Proprietor: Koninklijke Philips Electronics N.V., 5621 BA Eindhoven (NL)
(72) Inventor: WIJMA, Willem, S., NL-5656 AA Eindhoven (NL); BROUWER, Lammert, J., NL-5656 AA Eindhoven (NL)
(74) Representative: Damen, Daniel Martijn
(86) International application number: PCT/IB2005/052470
(87) International publication number: WO 2006/016296

(56) References cited:
- US-A- 3 641 332
- US-A- 5 562 838

## Description

The invention relates to a method for integrating a light guide in or onto a support structure, such as a housing, frame or carrying plate of an electronic appliance.

Many appliances make use of light guides. These are bar- or rod-shaped structures, made of a transparent material and arranged to guide light between a light generating source at a first location and a light requiring provision at a second location, for instance a photosensitive element or a light indicator, which informs a user regarding a particular status of the appliance, for instance an operating mode, stand by mode, charging mode or the occurrence of some error. Thanks to such a light guide a light-generating source may be positioned at a convenient location, removed from the light requiring location, thereby enhancing freedom of design.

However, when such a light guide is integrated in or onto a support structure, its light guiding performance deteriorates, due to the fact that at the areas where the light guide and support structure meet, no total internal reflection can take place. At these areas, light leaks away, into the support structure, thereby drastically reducing the light output of the light guide.

Methods for producing hight guides are disclosed in US-A-5,562,838 and US-A-3,641,332.

It is an object of the invention to provide a method for integrating a light guide in or onto a support structure, with minimum deterioration of the light guiding performance. To that end a method according to the invention is characterized by the features of claim 1.

The invention is based on the insight that the light guiding performance can be improved by surrounding the light guide with a material having a low refractive index, in particular air. This can be accomplished by letting the light guide and support structure shrink incompatibly during molding and/or subsequent cooling down. By doing so, the said parts will separate and move with respect to each other. As the separation surfaces will feature some roughnesses, the relative movement will cause an air gap to be formed between said surfaces.

The shrink behavior of a part depends, amongst others, on the material of which the part is made, the conditions, e.g. temperature and pressure to which it is exposed during molding and cooling down and its geometry. Therefore, either of these factors can be varied to influence the shrink behavior of the respective parts.

In a first advantageous embodiment, a method according to the invention is characterized by the features of claim 2.

By making the light guide and support structure of different materials, materials can be selected having distinctive, non-compatible shrink properties. Consequently, during molding and cooling down of the said parts, one part will shrink more than the other and therefore will move with respect to the other, causing the parts to be separated and an air gap to be formed. Suitable combinations of materials featuring high versus little shrinkage are for instance combinations of PP or PMP (both featuring high shrinkage) with MABS, PC, PET, PMMA or PS (all featuring little shrinkage). For the full name of these materials see Table 1.

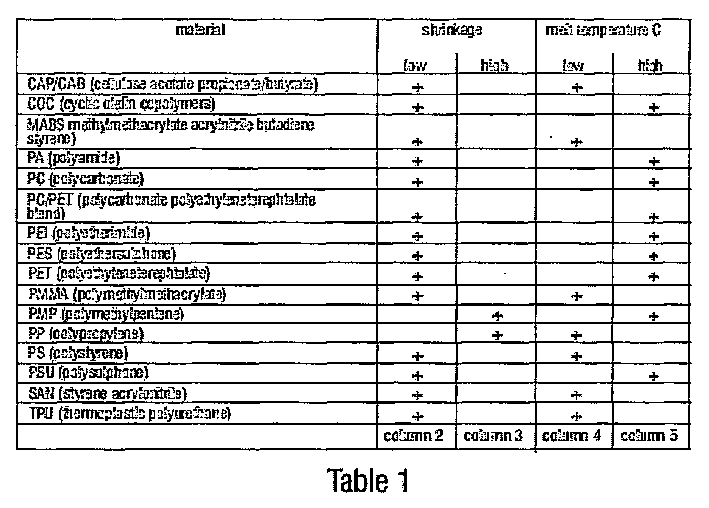

Furthermore, the materials are preferably selected such, that their melting points are incompatible.

This feature helps to prevent the parts from melting together during the molding step. This may facilitate the gap forming process and may prevent the parts from separating along an unpredictable separation surface. Moreover, it may result in a more smooth separation surface, which may enhance the reflective properties of the light guide. It may also offer the possibility to provide the separation surfaces with a specific, predetermined shape, which allows the shape of the gap to be controlled.

Suitable combinations of materials with high and low melting points are for instance combinations ofPP, PS, SAN, PMMA (all featuring a low melting point) with anyone of PC, PEI, PES or PSU (all featuring a high melting point).

The parts can for instance be molded by insert molding or by using a two (or more) shot molding process. In both cases the material having the highest melting point should be processed first. For that reason, the support structure is preferably made of the material having the highest melting point, so that the support structure will be molded first.

Alternatively or additionally, the light guide and support structure can be made of materials having incompatible chemical properties. This prevents the parts from bonding during molding thereof, thereby accomplishing a similar result as with the aforementioned incompatible melting behavior. However, in this case the material will not have to be molded in a preferred order. Suitable materials with non compatible chemical bonding properties are for instance combinations of polar and non-polar materials, such as polypropylene (PP) with either polycarbonate (PC) or styrene acrylonitrile (SAN).

In an alternative advantageous embodiment, a method according to the invention is characterized by the features according to claim 3.

By controlling the molding and cooling down conditions, in particular the pressure and/or temperature of the respective parts independently of each other, individual shrink behavior of said parts can be influenced and controlled to be incompatible. For instance, one part can be made to shrink faster than the other, by cooling said part faster and/or at a lower temperature. With this method, the parts may be manufactured from the same material. This may for instance be beneficial when the structure with the light guide is going to be operated under special conditions. When being made of the same material, the parts will respond in a similar way to such conditions, thereby helping the structure and light guide to keep functioning properly under such conditions.

In a further alternative embodiment, a method according to the invention is characterized by the features of claim 4.

By adapting the design of the light guide and/or support structure, for instance their shape or mutual orientation, shrinkage behavior can be influenced, at least locally, preferably there where both parts meet. Shrinkage can for instance be stimulated by making the light guide of long, thin design. By furthermore making the light guide sufficiently stiff, it will snap loose when shrinkage exceeds a certain threshold. Early snapping action of the light guide may be provoked by exposing the support structure to some external shock or bending load. This method, like the preceding one, offers the advantage that both parts can be made of the same material, which in some cases may be beneficial.

The invention furthermore describes a support structure with a light guide, wherein bordering surfaces of the light guide and support structure are separated by a small gap, caused by incompatible shrinkage of said parts during manufacturing thereof. Preferably, shrinkage is controlled in such way, that the gap features an average height of at least 50 to 100 nanometers, that is 10-20% of the wavelength of the guided light. Such a gap height allows good total internal reflection, which in turn helps to minimize loss of light through leakage, thereby enhancing the guiding performance of the light guide.

The invention furthermore relates to a device provided with a structure and light guide according to the invention. Such a device may for instance be a domestic appliance, such as a shaver, toothbrush, coffeemaker, iron, etc. or any other electronic device wherein light needs to be transmitted from one location to another.

Further advantageous embodiments of a method, structure and device according to the invention are set forth in the dependent claims.

To explain the invention, exemplary embodiments thereof will hereinafter be described with reference to the accompanying drawings, wherein:
Fig. 1A,B show respectively, in perspective view an inner and outer side of a support structure provided with a light guide according to the invention;
Fig. 2A,B show the air gap between the support structure and light guide of Fig. 1, in more detail; and
Fig. 3 shows an alternative embodiment of a support structure with a light guide according to the invention.

In this description, the term 'light guide' is meant to encompass all transparent structures, arranged to guide light from a first location to a second location, along a predetermined path. Usually, such light guides have a length, which is larger than the dimensions of their cross-section. However, in this description, structures with smaller lengths, such as for instance a window, are also considered to be comprised in the term 'light guide'.

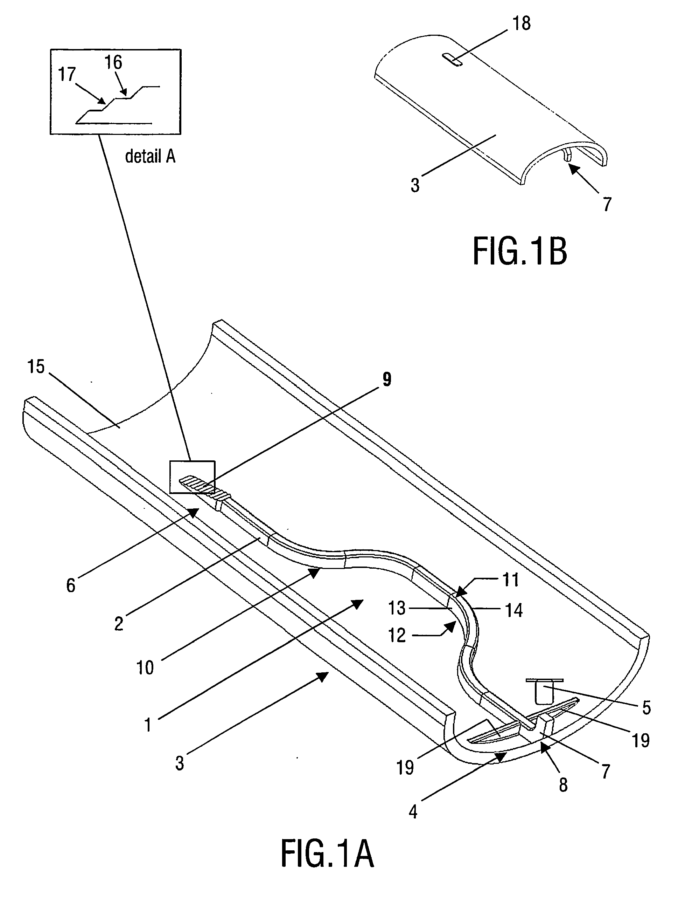

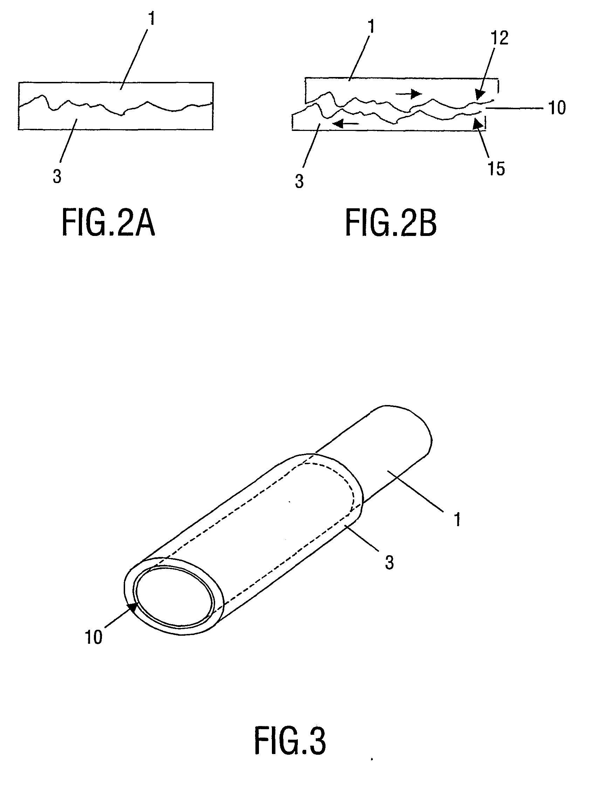

Fig. 1 shows a light guide 1, extending along an inner side 15 of a support structure 3. Both parts 1, 3 are molded from plastic and separated from each other by a small gap 10, extending between their respective bordering surfaces 12, 15, as best seen in Fig. 2.

In the illustrated embodiment, the support structure 3 is of partial cylindrical design, and may for instance form part of or constitute a housing or internal structure of a device, especially an electronic device. Of course, the structure 3 can have any other shape. Moreover, the structure 3 may carry other components (not shown) besides the light guide 1.

The light guide 1 comprises a rod-like structure 2 with a massive, substantially rectangular cross-section, having upper and lower surface 11, 12 and side surfaces 13, 14, extending substantially parallel to each other in respective pairs. The light guide 1 is made of a transparent material, in particular a plastic, and extends between a first location 4, where light from a nearby light source 5 can enter the light guide 1, and a second location 6, where light can exit the light guide 1. In the given embodiment, the light guide 1 extends along an omega(Ω)-shaped path between said first and second location 4, 6, thereby allowing light to be guided around possible obstacles (not shown), which may obstruct a straight path between said locations 4, 6.

At the first location 4, the light guide 1 is provided with a coupling portion 7, which is integrally connected with rod 2 and extends approximately perpendicular thereto, towards the light source 5. Said light source 5 may for instance comprise a LED, connected to a printed circuit board (not shown) or an external source, such as daylight, entering the coupling portion 7 via a suitable aperture in the appliance (not shown). The opposite end of the coupling portion 7 is provided with an inclined surface 8, extending under an angle of about 45° towards the lower surface 12 of the rod 2, for reasons to be explained below.

At the second location 6, the light guide 1 is provided with a stepped end 9 (see detail A, showing the stepped end in more detail, in cross sectional view), with upper surfaces 16 that extend substantially parallel to the upper surface 11 of the 92-shaped rod 2 and inclined surfaces 17, which extend under an angle of about 45° with said upper surfaces 16, in the guiding direction of the rod 2. The stepped end 9 at least partially penetrates the support structure 3, thereby forming an oval light spot 18 at the outer side of the support structure 3, as shown in Fig. 1B, via which light can exit the light guide 1, for instance to inform a user regarding a particular status of the device or to activate a photosensitive component, positioned near said light spot 18 (not shown). Furthermore, the penetrated end 9 helps to 'fixate' the light guide 1 in a direction perpendicular to the support plate 3, wherein the term 'fixate' in this context means to hold the light guide 1 in place, while allowing it to shrink. For lateral 'fixation' of the light guide, a pair of fixtures 19 is provided, which extend at opposite sides of the light guide, near the light input end 4 thereof. Of course, more fixtures 19 may be provided, for instance spaced at regular intervals along the light guide 1 (not shown). Preferably, these fixtures 19 are integrally molded with the support structure 3.

The light guide 1 functions as follows. Light beams emitted by light source 5 will be guided along the coupling part 7, through reflection against its inner side surfaces. When reaching the end, the inclined surface 8 will reflect the light beams in the right direction, that is into the Ω-shaped rod 2. The light beams are subsequently guided along the Ω-shaped rod 2, through reflection against its inner surfaces 11-14. Upon reaching the stepped end 9, the light beams will be reflected downward through the oval light spot 18 by the inclined surfaces 17. The stepped-configuration ensures that the light beams are not reflected all at once, but gradually, thereby ensuring the light spot 18 to be substantially uniformly illuminated along its entire surface.

From this description it is clear that the light guiding performance of the light guide 1 depends for a substantial part on the reflective properties of its inner surfaces 11-14. To stimulate this reflection it has been found that said reflective surfaces 11-14 preferably border on materials having a low refractive index, such as air. This is why the embodiment according to Fig. 1 is provided with an air gap 10 between the light guide 1 and the underlying support plate 3.

According to the invention, such a gap 10 can be realized in various ways, all based on the inventive thought of letting the parts 1,3 shrink incompatibly during their manufacture. By doing so, the parts 1, 3 will separate, as illustrated in Fig. 2A, and move with respect to each other, as illustrated in Fig. 2B. As the separation surfaces 12, 15 will have a certain roughness, this relative movement will result in a gap 10 to be formed. As such, the light guide 1 will be virtually in its entirety be surrounded by air, which is beneficial for the light guiding performance.

As mentioned above, the incompatible shrink behavior can be accomplished in different ways. In a first embodiment, the parts 1, 3 can be molded from materials, having incompatible shrink behavior. Table 1 gives a list of materials (all transparent and hence suitable for manufacturing the light guide 1), featuring either low shrinkage, indicated by a plus in the second column or high shrinkage, indicated by a plus in the third column. From this it is clear that PMP and PP both have high shrinkage, whereas the other materials listed in Table 1 have low shrinkage. Therefore, any combination of either PMP or PP with anyone of the other materials listed in Table 1 would be a suitable combination for providing incompatible shrink behavior in the sense of the invention. In a preferred embodiment PMP or PP is combined with MABS, PC, PET, PMMA or PS, because MABS features good toughness and chemical resistance, PC has good light guiding capacity and good impact-resistance, PET also has good impact-resistance and excellent clearness, PMMA has good clearness as well and good light guiding capacity and PS has good clearness and a good price.

The parts 1,3 can for instance be made by insert molding or multiple shot molding. Both molding techniques are known per se, and therefore will need no further explanation in this description.

In an alternative embodiment, the light guide 1 and support structure 3 can be made to shrink incompatibly, by exposing these parts 1, 3 to different pressure and/or temperature conditions during molding and/or subsequent cooling down. To that end, a special mould may be provided (not shown), allowing the parts 1, 3 to be pressed and/or cooled differently, thereby creating, at least temporarily, different shrink behavior. In this case the parts 1, 3 may be made from the same material. Of course this method can also be applied when using incompatible shrink materials, so as to reinforce the incompatible shrink behavior.

In yet another alternative embodiment, the light guide 1 and support structure 3 can be made to shrink incompatibly by an appropriate design of their geometry, especially at their bordering surfaces. By proper design it may for instance be possible to have one part shrink in a first main direction and the other part shrink in a second main direction which includes an angle with the first direction. Consequently, due to the shrinkage in different directions, possibly encouraged by some external mechanical shock or deformation, the parts will separate, and the desired gap 10 will be formed. Again, this method may be combined with one of the previous methods or both methods.

In a highly preferred embodiment, the different parts 1, 3 are not only made to shrink incompatibly, according to anyone of the above-described methods, but are prevented from melting or bonding together already during their molding. This offers several advantages. For one, when the parts are separated from each other by shrinkage, it may be difficult to exactly predict, let alone control where the separation surface will be located. By preventing the parts from bonding or melting together from the start, such separating surface, at least the location thereof can be more accurately controlled. Moreover, when separating the parts 1,3 through shrinkage, the separation surfaces 12, 15 may contain fractured material, which generally features considerable roughness. This roughness may deteriorate the light guiding performance of the light guide 1, as light may leak away via such rough spots. By preventing bonding or melting together from the start, a more smooth separation surface may be obtained. Moreover, the shape of said separation surfaces may be controlled, allowing control over the final geometry of the gap 10.

Preventing the parts form bonding or melting together can be accomplished by making the light guide 1 and support structure 3 from materials having non-chemical bonding behavior, such as combinations of polar and non-polar materials, e.g. polypropylene (PP) with either polycarbonate (PC) or styrene acrylonitride (SAN), or from materials having incompatible melting points. Columns four and five of Table 1 indicate by means of a plus whether the materials have a low or high melting point respectively. Any combination of a material featuring a plus in the fourth column with a material featuring a plus in the fifth column therefore constitutes a suitable combination for incompatible melting behavior.

From Table 1 it is furthermore clear that suitable combinations of materials featuring both incompatible shrink behavior and incompatible melting behavior would be any combination of PP with anyone of the materials having a plus in the fifth column, except PMP, or any combination of PMP with anyone of the materials having a plus in the fourth column, except PP.

It is noted that when using materials with incompatible melting points in one of the molding techniques mentioned before, it is highly recommended to mold the part having the highest melting point first. Preferably (yet not necessarily) this is the support structure 3.

Thanks to the above-described manufacturing methods, the light guide 1 can be surrounded by air, substantially in its entirety, while extending along a support structure over a substantial portion of its length. As mentioned before, the surrounding air is beneficial for the light guiding performance of the light guide. Moreover, by making the light guide and support structure from materials that do not bond or melt during molding, a smooth separation surface may be created, which is beneficial for the internal reflection of the light guide. Consequently, a light guide can be made having a good light guiding performance, with little leakage and a large light output.

The manufacturing methods furthermore offer the advantage that two parts (the light guide and the support structure) which are normally manufactured as separate parts, can be manufactured in one go, that is in one molding process, thereby reducing handling, positioning errors and assembly costs.

In the given example, the light guide 1 extends over almost its entire length along the support structure 3. It will be clear that other configurations are possible. For instance the structure 3 can be provided with openings, extending at least partly underneath the light guide 1. Alternatively, the light guide 1 may extend through the support structure, substantially perpendicular thereto. Furthermore, a single light source 5 can be combined with two or more light guides, enabling light from the single source 5 to be guided to different locations of an appliance. Also, the light guide 1 can have many different shapes, for instance to circumvent obstacles between the light source 5 and the light output 18. The light guide 1 can be of substantially one-dimensional configuration, wherein the light path extends in a straight line between the light source 5 and light exit 18, two-dimensional configuration, wherein said light path extends in a plane, or three-dimensional configuration, as shown in Fig. 1, wherein the light path extends in a three-dimensional space.

Fig. 3 presents an example of an alternative light guide configuration according to the invention, wherein the light guide 1 extends over its entire length or a part thereof through a cylindrically shaped support structure 3. The parts 1, 3 are separated from each other by a cylindrical gap 10, which is formed according to one of the methods described above.

The invention is not in any way limited to the exemplary embodiments presented in the description and drawings. Combinations (of parts) of embodiments shown and described in this description are explicitly understood to fall within the scope of the invention as well. Moreover, many variations are possible within the scope of the invention, as outlined by the claims.

## Claims

1. Method for integrating a light guide (1) in or onto a support structure (3), wherein said parts (1, 3) are molded and wherein during this molding and a subsequent cooling down process, shrink behavior of the respective parts (1, 3) is controlled in such way that both parts (1, 3) shrink incompatibly, at least temporarily and at least near their bordering areas, thereby causing the parts (1, 3) to be separated and an air gap (10) to be formed between their respective separation surfaces (12, 15).

2. Method according to claim 1, wherein the light guide (1) and support structure (3) are molded from different materials, having incompatible shrink behavior.

3. Method according to claim 1 or 2, wherein the conditions, such as pressure and temperature to which the parts are exposed during molding and subsequent cooling down are controlled independent of each for each part, so as to cause incompatible shrink behavior.

4. Method according to anyone of the preceding claims, wherein the shape and/or relative orientation of the respective parts (1,3) is designed in such way, so as to stimulate incompatible shrink behavior.

5. Method according to anyone of the preceding claims, wherein the light guide (1) and support structure (3) are molded by insert molding or by a multiple shot injection molding process.

## Patentansprüche

1. Verfahren, um einen Lichtleiter (1) in oder auf einer Trägerstruktur (3) zu integrieren, wobei die Teile (1, 3) formgepresst werden, und wobei während dieses Formpressvorgangs und eines nachfolgenden Abkühlvorgangs ein Schrumpfverhalten der jeweiligen Teile (1, 3) so gesteuert wird, dass beide Teile (1, 3), zumindest temporär und zumindest in der Nähe ihrer Randbereiche, inkompatibel schrumpfen, wodurch bewirkt wird, dass die Teile (1, 3) getrennt werden und sich zwischen deren jeweiligen Trennflächen (12, 15) ein Luftzwischenraum (10) bildet.

2. Verfahren nach Anspruch 1, wobei der Lichtleiter (1) und die Trägerstruktur (3) aus verschiedenen Materialien mit inkompatiblem Schrumpfverhalten formgepresst werden.

3. Verfahren nach Anspruch 1 oder 2, wobei die Bedingungen, wie z.B. Druck und Temperatur, denen die Teile während des Formpressvorgangs und nachfolgenden Abkühlvorgangs ausgesetzt sind, für jeden Teil unabhängig voneinander gesteuert werden, um inkompatibles Schrumpfverhalten zu bewirken.

4. Verfahren nach einem der vorangegangenen Ansprüche, wobei die Form und/oder relative Orientierung der jeweiligen Teile (1, 3) so vorgesehen ist, dass inkompatibles Schrumpfverhalten stimuliert wird.

5. Verfahren nach einem der vorangegangenen Ansprüche, wobei der Lichtleiter (1) und die Trägerstruktur (3) durch Einlegetechnik oder durch ein Mehrstufen-Spritzgussverfahren formgepresst werden.

## Revendications

1. Procédé d'intégration d'un guide de lumière (1) dans ou sur une structure de support (3), dans lequel lesdites pièces (1, 3) sont moulées et dans lequel, lors de ce moulage et d'un processus subséquent de refroidissement, le comportement de rétrécissement des pièces respectives (1, 3) est commandé de telle façon que les deux pièces (1, 3) se rétrécissent d'une manière incompatible, au moins temporairement et au moins près de leurs zones limitrophes, de ce fait effectuant que les pièces (1, 3) sont séparées et qu'un entrefer (10) est formé entre leurs surfaces de séparation respectives (12, 15).

2. Procédé selon la revendication 1, dans lequel le guide de lumière (1) et la structure de support (3) sont formés à partir de matériaux différents ayant un comportement de rétrécissement incompatible.

3. Procédé selon la revendication 1 ou selon la revendication 2, dans lequel les conditions, telles que la pression et la température auxquelles les pièces sont exposées pendant le moulage et le refroidissement subséquent, sont commandées l'une indépendamment de l'autre pour chaque pièce de manière à causer un comportement de rétrécissement incompatible.

4. Procédé selon l'une quelconque des revendications précédentes 1 à 3, dans lequel la forme et/ou l'orientation relative des pièces respectives (1, 3) sont conçues d'une telle façon de manière à stimuler un comportement de rétrécissement incompatible.

5. Procédé selon l'une quelconque des revendications précédentes 1 à 4, dans lequel le guide de lumière (1) et la structure de support (3) sont moulés par un processus de moulage par injection ou par un processus de moulage par injection à jets multiples.
